# EUROPEAN PATENT SPECIFICATION

(11) **EP 0 399 964 B1**
(45) Date of publication and mention of the grant of the patent: **16.03.1994**
(21) Application number: 90830226.8
(22) Date of filing: 18.05.1990
(51) Int. Cl.: B62K 25/24

(54) **Front shock absorbing unit for motorcycles**
Vorderstossdämpfer für Motorrad
Amortisseur avant pour motocyclette

(30) Priority: 24.05.1989 IT 8559489
(43) Date of publication of application: 28.11.1990
(73) Proprietor: De Bei, Claudio, 36061 Bassano del Grappa (IT)
(72) Inventor: De Bei, Claudio, 36061 Bassano del Grappa (IT)
(74) Representative: Bettello, Pietro, Dott. Ing.

(56) References cited:
- FR-A- 2 533 523
- FR-A- 2 539 375
- FR-A- 2 589 421
- GB-A- 2 121 364
- GB-A- 2 131 754
- US-A- 4 388 978
- US-A- 4 526 249

## Description

The present invention concerns a front shock absorbing unit for motorcycles.

At the present time, shock absorption on the front wheel of motorcycles and similar vehicles is effected by means of telescopic forks, the operation of which depends on elastic means assisted by hydraulic or gas devices.

Forks of this kind have numerous disadvantages, even when they are of the highest quality, as in the case of those for competition motorcycles.

The disadvantages presented by the shock absorbers of the known type are due basically to the fact that the front wheel assembly tends to become deformed under the effect of the remarkable shearing, bending and torsional stresses it is subjected to, especially at high speed.

From GB-A-2121364 it is already known a shock absorbing unit which comprises a deformable structure with two forms pivoted on one side to members fixed to the hub of the front wheel; on the other side, where the form arms are at their widest apart, the upper fork is pivoted to the frame of the motorcycle.

This deformable structure presents a parallelogram form; however the structure cannot substantially modify its position in respect of the frame, being connected directly to the said; in particular the so called steering angle between the members fixed to the hub and the vertical line cannot be modified.

Moreover the action of the device is too much direct and not progressive as it would be advisable.

The object of the present invention is to create a shock absorbing unit for the front wheel of motorcycles which is free from the disadvantages just described.

According to the invention, this may be achieved by providing a deformable structure with two forks pivoted, on one side, to a sleeve that is integral with the stanchions which are themselves pivoted to the wheel hub, whilst, on the other side, where the fork arms are at their widest apart, the said forks are pivoted respectively to the frame and to a pair of link rods which are in turn pivoted to the frame. All the pins at the ends of the forks are mutually connected to a cross, whilst the pins connecting to the frame on a single side of the frame itself are linked in pairs by a rod in which there is fixed a tube for supporting the handlebar. The said tube is jointed by means of a structure which includes a plurality of rods on which a plate jointed to the upper ends of the stanchions connected to the wheel hub slides. In addition, there is a tie rod pivoted to each of the arms of the upper fork, the opposite end of the said tie rod being further pivoted to a lever which is centrally pivoted to the frame and pivoted at its other end to a shock absorbing element, which is also pivoted to the frame at the opposite end and located in such a way as to correspond to the longitudinal plane of symmetry of the frame.

In one embodiment of the invention as claimed below, the connecting pins between the link rods and the frame present an eccentric element which varies the angular position by which the shape of the entire shock absorbing unit is modified, especially the angle of the stanchions with respect to the vertical, this making it possible to adapt the position of the stanchions themselves to the changed requirements of the rider, in relation to the course which the rider is following.

These and other characteristics of the present disclosure are highlighted in the following detailed description of its preferred, although not sole, embodiment, with reference to the accompanying drawings, where:
- Figure 1 (Table 1) is a schematic side view of a motorcycle to which the invented device may be applied.

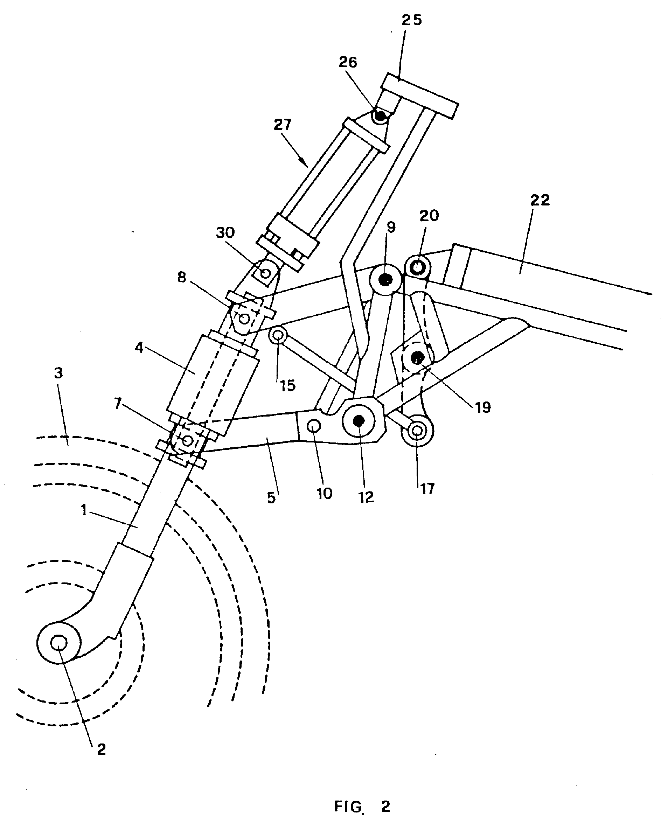

- Figure 2 (Table 2) is a side view of the invented device.
- Figures 3 and 4 (Table III) are front views of the device, respectively with and without some of its components.
- Figure 5 (Table IV) is a front view of the invented device, without some of its components.
- Figures 6 and 7 are (Table V) are side views of the invented device which highlight the possibility of varying the angle of the stanchions relative to the front wheel.

The illustrations listed above show that the invention envisages a pair of rigid stanchions 1, at the lower ends of which is pivoted hub 2 of front wheel 3, and the upper ends of which are integrally attached to a support 4.

Two forks 5 and 6 are pivoted to the stanchions at points 7 and 8, respectively. The said forks are arranged in such a way that the area in which they are furthest apart is towards the back of the motorcycle.

Whilst the ends of upper fork 6 are pivoted to the motorcycle frame at point 9, the ends of the arms of fork 5 are pivoted to a link rod 11 at point 10, the said link rod being in turn pivoted to the fixed frame structure at point 12.

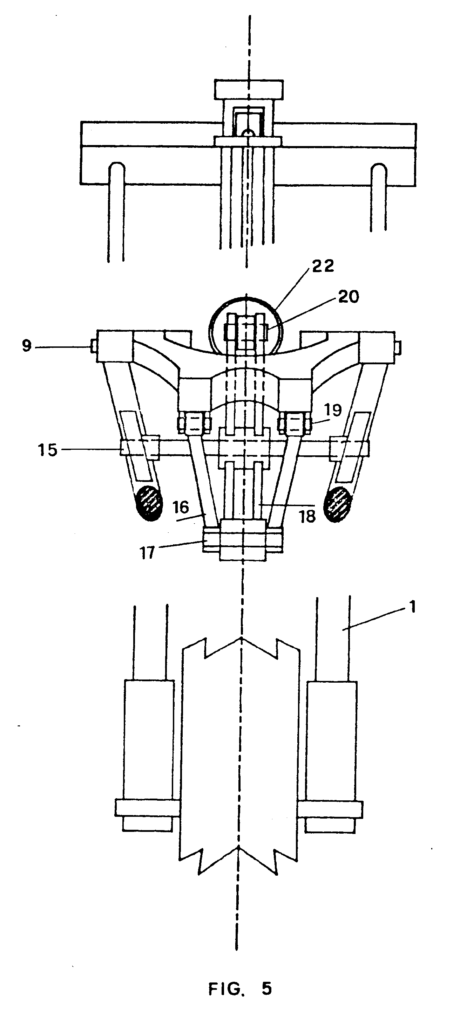

Connecting pins 9 and 12 located on the same side of the motorcycle are linked in pairs by a rod 13. Pins 9 and 10, on the other hand, are linked to a fixed cross 14 (Fig.4).

Two tie rods 16 are pivoted at point 15 to the two arms of the upper fork 6, the opposite ends of the said tie rods 16 being pivoted at point 17 to an arm 18 of a lever which is in turn pivoted to the frame at point 19.

The opposite ends of the said fork arms are pivoted at point 20 to head 21 of a shock absorber 22, of hydraulic type for example.

The rear end of the shock absorber is pivoted to the motorcycle frame at point 23 and is located in such a way as to correspond to the plane of symmetry of the frame.

The motorcycle handlebar, which for simplicity is not illustrated, is supported by tubes 24 which are intgrally attached to rods 13.

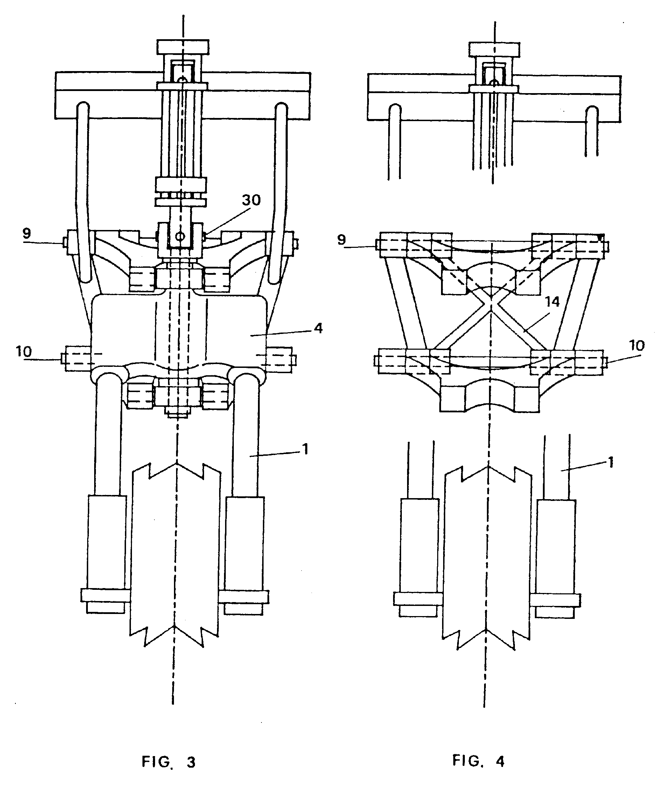

The said tubes end with a supporting element 25, which is attached by means of a universal joint 26 to a structure 27 that includes a plurality of rods 28 on which there slides a plate 29 which is attached by means of another universal joint 30 to the upper end of sleeve 4 which is fixed integrally to stanchions 1 (Fig.3).

Consequently, when the front wheel 3 encounters a sudden depression in the road, which with the known devices causes the stanchions of the shock absorbers to sink deeply into their cylinders, the articulated framework described above absorbs the shock by yielding to the force which tends to deform it.

In particular, the stanchions 1 and, hence sleeve 4, are designed to move up and to carry pins 7 and 8 with them, in such a manner as to cause forks 5 and 6 to rotate upwards about pins 9 and 12 which connect the shock absorber to the motorcycle frame, the said pins 9 and 12 obviously remaining fixed in relation to the frame.

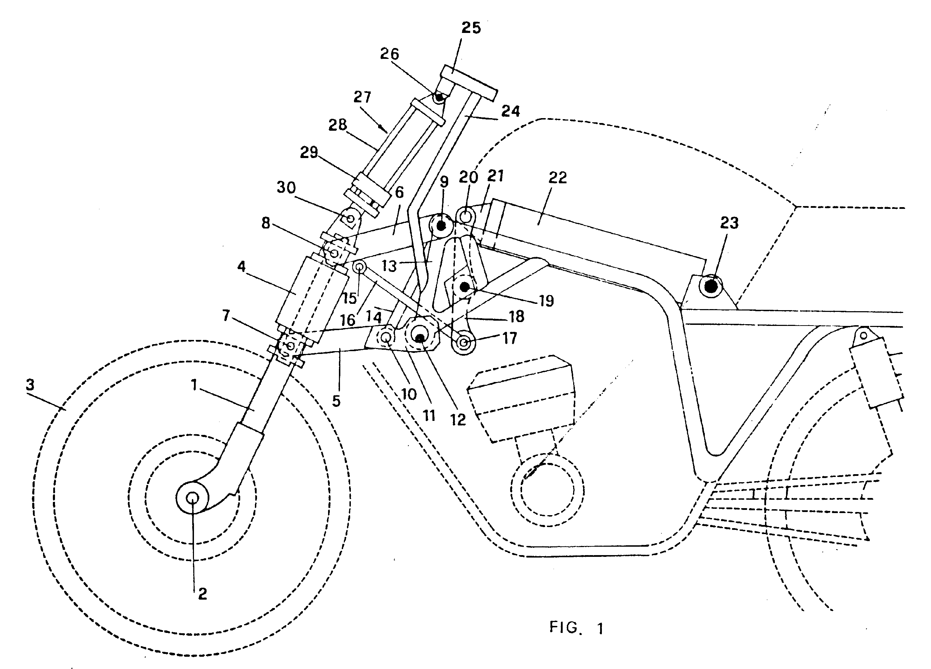

This results in the shifting of tie rods 16 and hence the rotation of arm 18 about pin 19 (in clockwise direction, with reference to Fig.1).

This results in the compression of shock absorber 22 which obviously reacts with a force which tends to move lever 18 back to the position illustrated in the drawing.

The shape of the system is such that this reaction occurs extremely rapidly and effectively, enabling the entire system, after every shock, to return extremely rapidly to the position illustrated in the drawing.

In practice, the present shock absorber eliminates the defect typical of shock absorbers known up to the present time whereby the stanchions sink deeply into their cylinders whenever the shock absorber is subjected to strain.

In particular, when the motorcycle is braked suddenly, the front wheel stanchions hardly move down at all, thanks to the special structure of the system.

Moreover, the fact that the shock absorber is positioned centrally on the frame prevents all possible strain, be it torsional, flexural or other, on the moving parts, which instead occurs in known shock absorbers.

Other advantages of the present invention are that the centre of gravity of the entire motorcycle is lower than usual, and that, during the operation of the shock absorber, the distance between the wheel centres does not undergo any variation.

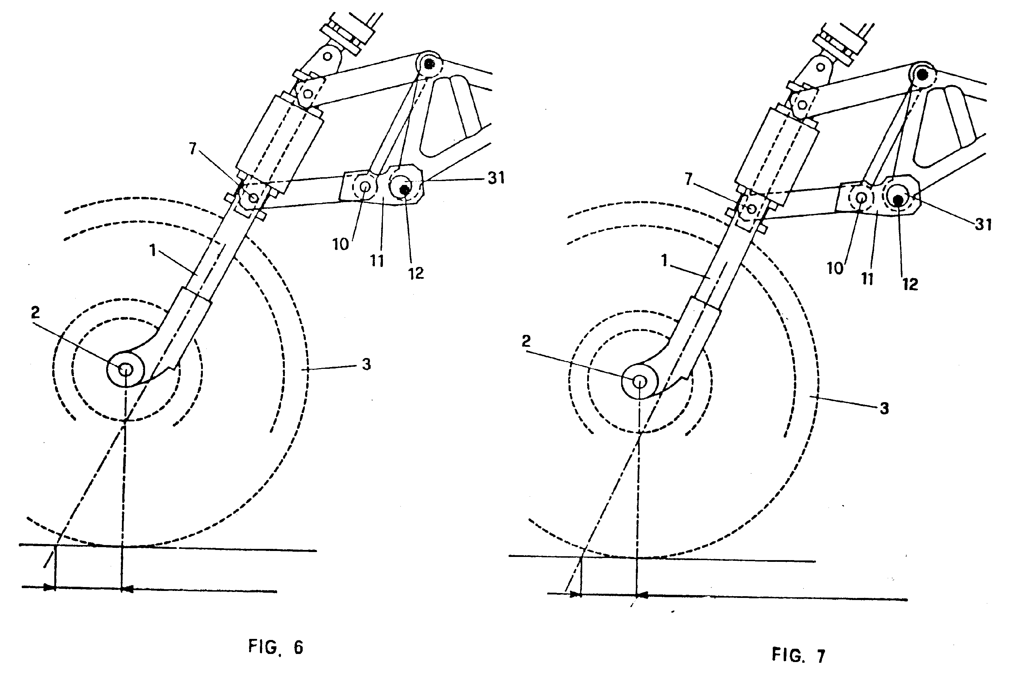

Figures 6 and 7 show that the device is even more effective if pins 12 are housed eccentrically in a cylindrical structure 31 that is able to rotate about its own axis within a seating made transversely on link rod 11.

Obviously, when this cylindrical structure rotates, the position of pin 12 changes in such a way as to modify the angle of the stanchions with respect to the vertical. In particular, the position shown in Fig. 6 is suitable for straight courses, with few curves, whilst the position shown in Fig. 7 is particularly suitable for tortuous courses.

## Claims

1. A front shock absorbing unit for motorcycles comprising a deformable structure with two forks (5 and 6), pivoted on one side (7 and 8) to the stanchions (1) fixed to the hub (2) of the wheel (3), the upper fork (6) being pivoted (9) on the other side, where the fork arms are at their widest apart, to the frame, the unit being characterized by the fact that on this last side the lower fork (5) is pivoted to a pair of link rods (11) which are in turn pivoted (12) to the frame, all the pins (9 and 10) at the ends of the forks being mutually connected to a cross (14), whilst the pins (9 and 12) connecting to the frame on a single side of the frame itself are linked in pairs by a rod (13) to which there is fixed a tube (24) for supporting the handlebar, the said tube being jointed (26) by means of a structure (27) which includes a plurality of rods (28) on which a plate (29), also jointed (30) to the upper ends of the stanchions connected to the wheel hub, slides, there being also envisaged a tie rod (16) pivoted to each of the arms of the upper fork (6), the opposite end of the said tie rod being further pivoted to a lever (18) which is centrally pivoted (19) to the frame and pivoted (20) at its other end to a shock absorbing element (22), which is also pivoted (23) to the frame at the opposite end and located in such a way as to correspond to the longitudinal plane of symmetry of the frame itself.

2. A front shock absorbing unit for motorcycles as in claim 1 characterized by the fact that the pins (12) with which the link rods (11) are connected to the frame, are housed eccentrically in a cylindrical structure (31) within a seating made transversely on link rod, the said cylindrical structure being capable of effecting angular movements about its own axis.

## Patentansprüche

1. Vordere Stoßdämpfereinheit für Motorräder mit einer deformierbaren Anordnung, die zwei Gabeln (5 und 6) aufweist, die an einem Ende (7 und 8) an den an der Nabe (2) des Rades (3) befestigten Stützen (1) drehbar gelagert sind, wobei die obere Gabel (6) an dem anderen Ende, wo die Gabelarme ihren größten Abstand voneinander haben, drehbar (9) am Rahmen gelagert ist, dadurch gekennzeichnet, daß an diesem letzteren Ende die untere Gabel (5) drehbar an zwei Gelenkstangen (11) gelagert ist, die ihrerseits drehbar (12) an dem Rahmen gelagert sind, daß die Stifte (9 und 10) an den Enden der Gabeln gemeinsam mit einem Kreuz (14) verbunden sind, während die Stifte (9 und 12), die mit dem Rahmen an einer Seite des Rahmens selbst verbunden sind, paarweise an jeweils eine Stange (13) angelenkt sind, an der ein Rohr (24) zur Lagerung der Lenkstange befestigt ist, daß das Rohr mittels einer Anordnung (27) angelenkt (26) ist, die eine Vielzahl von Stangen (28) enthält, auf denen eine Platte (19) gleitet, die ebenfalls an den oberen Enden der mit der Nabe des Rades verbundenen Stützen angelenkt (30) ist, daß ferner eine Zugstange (16) vorgesehen ist, die drehbar mit jedem der Arme der oberen Gabel (6) verbunden ist, wobei das entgegengesetzte Ende der Zugstange ferner drehbar mit einem Hebel (18) verbunden ist, der in der Mitte drehbar (19) mit dem Rahmen und an seinem anderen Ende drehbar (20) mit einem Stoßdämpferelement (22) verbunden ist, das ebenfalls an dem Rahmen an dem entgegengesetzten Ende drehbar (23) gelagert und so gelegen ist, daß es mit der Längssymmetrieebene des Rahmens übereinstimmt.

2. Vordrere Stoßdämpfereinheit für Motorräder nach Anspruch 1, dadurch gekennzeichnet, daß die Stifte (12), mit denen die Gelenkstangen (11) mit dem Rahmen verbunden sind, exzentrisch in einer zylindrischen Anordnung (31) innerhalb einer quer zur Gelenkstange verlaufenden Lagerung untergebracht sind, so daß die zylindrische Anordnung in der Lage ist, Winkelbewegungen um ihre eigene Achse auszuführen.

## Revendications

1. Amortisseur avant pour motocyclette comprenant une structure déformable avec deux fourches (5 et 6), montée à pivotement d'un côté (7 et 8) sur des colonnes (1) fixées au moyeu (2) de la roue (3), la fourche supérieure (6) étant montée à pivotement (9) de l'autre côté, à l'emplacement où les bras de la fourche sont le plus écartés du cadre, caractérisé en ce que, sur ce dernier côté, la fourche inférieure (5) est montée à pivotement sur une paire de biellettes (11) qui sont, à leur tour, montées à pivotement (12) sur le cadre, tous les axes (9 et 10) placés aux extrémités des fourches étant mutuellement reliés à une traverse (14), tandis que les axes (9 et 12) de liaison avec le cadre d'un seul côté du cadre lui-même sont reliés par paires au moyen d'une tige (13) à laquelle est fixé un tube (24) pour supporter le guidon, ledit tube étant articulé en 26 au moyen d'une structure (27) qui comprend une pluralité de tiges (28) sur lesquelles une plaque (29), également articulée en 30 aux extrémités supérieures des colonnes associées au moyeu de la roue, coulisse, une barre de liaison (16) étant également prévue à pivotement avec chacun des bras de la fourche supérieure (6), l'extrémité opposée de ladite barre de liaison étant en outre montée à pivotement sur un levier (18) relié au cadre à pivotement, en son centre (19) et articulée en 20 à son autre extrémité sur un amortisseur (22) qui est également monté à pivotement en 23 sur le cadre à son extrémité opposée et située de façon à correspondre au plan longitudinal de symétrie du cadre lui-même.

2. Amortisseur avant pour motocyclette selon la revendication 1, caractérisé en ce que les axes (12), grâce auxquels les barres de liaison (11) sont reliées au cadre, sont disposés de manière excentrique dans une structure cylindrique (31) à l'intérieur d'un siège monté transversalement sur la barre de liaison, ladite structure cylindrique étant capable d'effectuer des mouvements angulaires autour de son axe propre.
